Europäisches Patentamt

European Patent Office

Office européen des brevets

(11) Publication number: **0 192 736**
**B1**

(12) **EUROPEAN PATENT SPECIFICATION**

(45) Date of publication of patent specification: **23.05.90**

(51) Int. Cl.⁵: **H 04 N 9/04**

(21) Application number: **85904520.5**

(22) Date of filing: **28.08.85**

(86) International application number:
**PCT/US85/01631**

(87) International publication number:
**WO 86/01965 27.03.86 Gazette 86/07**

(54) **SIGNAL PROCESSING METHOD AND APPARATUS FOR SAMPLED COLOR IMAGE SIGNAL.**

(30) Priority: **10.09.84 US 648999**

(43) Date of publication of application:
**03.09.86 Bulletin 86/36**

(45) Publication of the grant of the patent:
**23.05.90 Bulletin 90/21**

(84) Designated Contracting States:
**DE FR GB NL**

(56) References cited:
**US-A-4 153 912**
**US-A-4 176 373**

(73) Proprietor: **EASTMAN KODAK COMPANY (a New Jersey corporation)**
**343 State Street**
**Rochester New York 14650 (US)**

(72) Inventor: **COK, David, Roy**
**10 Sibley Place Apt. 3**
**Rochester, NY 14607 (US)**

(74) Representative: **Parent, Yves et al**
**Kodak-Pathé Département Brevets et Licences**
**Centre de Recherches et de Technologie Zone Industrielle**
**F-71102 Chalon-sur-Saône Cédex (FR)**

# EP 0 192 736 B1

**Description**

Technical field

The invention relates to signal processing methods and apparatus for processing a sampled color image signal of the type having a highly sampled color component and a less highly sampled color component, and more particularly to such signal processing methods for providing interpolated signal values between sampled values of the less highly sampled color component.

Background art

Some color image sensing apparatus produce a sampled color image signal by sampling one color component of an image at a higher spatial sampling frequency than other color components. The more highly sampled colored component usually corresponds to the portion of the spectrum to which the human eye is most sensitive to image detail, and is often called the luminance component. The term "luminance component" as used herein, refers to the most highly sampled color component, whether it be green, white, or some other color.

The less highly sampled color components, are often referred to as chrominance components and may comprise for example, red and blue, or cyan and yellow. The term "chrominance component" as used herein, refers to a less highly sampled color component of an image regardless of the particular color.

In some color image sensing apparatus of this type, one image sensor samples the luminance component of the image, and another image sensor samples two chrominance components. The image sensing elements on the image sensor that samples the chrominance components alternate between one color and the other.

In other color image sensing apparatus, a single image sensor is employed to sense the luminance and two chrominance components of the image. The image sensing elements of the image sensor alternate between elements for sampling luminance and elements for sampling one and then the other of the chrominance components.

When reconstructing an image from the sampled color image signals produced by these color image sensors, values of the luminance and chrominance components are provided for each sample location. This is generally accomplished by using some form of linear interpolation between sample values of the less highly sampled color components. Reconstruction of the color image by linear interpolation of the chrominance components, results in the appearance of colored fringes in areas of image detail, due to a deviation of the interpolated values from the actual color values existing in the original image.

It is known to employ signal processing to reduce the appearance of these colored fringes in the reconstructed images. US—A—4,176,373, issued November 27, 1979, Dillon and Bayer discloses analog signal processing apparatus for interpolating values between the sampled luminance and chrominance values in a sampled color image signal produced by a single image sensor having a checkerboard pattern of luminance (green) image sensing elements interspersed with chrominance component (red and blue) image sensing elements. The apparatus performs a linear interpolation between chrominance component samples, then adds a high spatial frequency portion of the luminance signal to the interpolated chrominance component signals. Adding the high spatial frequency portion of the luminance signal to the interpolated chrominance component signals reduces the appearance of color fringes in areas of image detail by driving the high spatial frequency portion of the image signal towards a neutral color. Although the signal processing disclosed by Dillon and Bayer is effective to reduce the appearance of color fringing in the detailed areas of the image, the method achieves this object at the expense of altering the sampled values of the chrominance component signals of the image signal. As a result, some hue shifts are introduced in areas of image detail even as the appearance of color fringing is reduced.

The object of the present invention is to provide a signal processing method for reducing the appearance of colored fringes in areas of fine image detail without introducing unwanted hue shifts.

Disclosure of the invention

The above-noted object is achieved by forming signals representing hue component values at neighboring chrominance component sample locations as a function of a luminance value and a chrominance component value at the neighboring locations; forming a signal representing an interpolated hue component value as a function of the neighboring hue component values; and forming a signal representing an interpolated chrominance component value as a function of the interpolated hue component value and a luminance value at the interpolation location.

As used herein, the term "hue component" refers to a quantity relating the value of a less highly sampled color (chrominance component) to the value of the more highly sampled color (luminance). By interpolating the hue component and deriving the interpolated chrominance component from the interpolated hue component, hues are allowed to change only gradually, thereby reducing the appearance of colored fringes in areas of image detail without introducing unwanted hue shifts.

In one embodiment of the invention, the sampled color image signal represents luminance and chrominance values in exposure space, the signals representing hue component values are formed as the ratio of the sampled chrominance component value to the luminance value at the respective chrominance component sample locations, and the interpolated chrominance component value is formed as the product

2

of the interpolated hue component value and the luminance value at the interpolation location.

In another embodiment of the invention, the sampled color image signals represent luminance and chrominance values in density space, the hue component values are formed as the differences between the sampled chrominance component values and the luminance values at the respective chrominance component sample locations, and the interpolated chrominance component value is formed as the sum of the interpolated hue component value and the luminance value at the interpolation location.

Brief description of the drawings

Modes of carrying out the invention are described below, with reference to the drawings wherein:

Fig. 1 schematically shows apparatus having two image sensors for producing, processing, and displaying a sampled color image signal;

Fig. 2 is a diagram useful in describing the signal processing method applied to the sampled color image signal produced by the image sensing apparatus shown in Fig. 1;

Fig. 3 is a block diagram illustrating the essential functions performed by the signal processing method of the present invention;

Fig. 4 schematically shows apparatus having a single image sensor for producing a sampled color image signal;

Fig. 5 is a diagram useful in describing the signal processing method applied to the signal produced by the image sensing apparatus shown in Fig. 4; and

Fig. 6 is a diagram showing an alternative color sampling pattern for the single image sensor shown in Fig. 3.

Modes of carrying out the invention

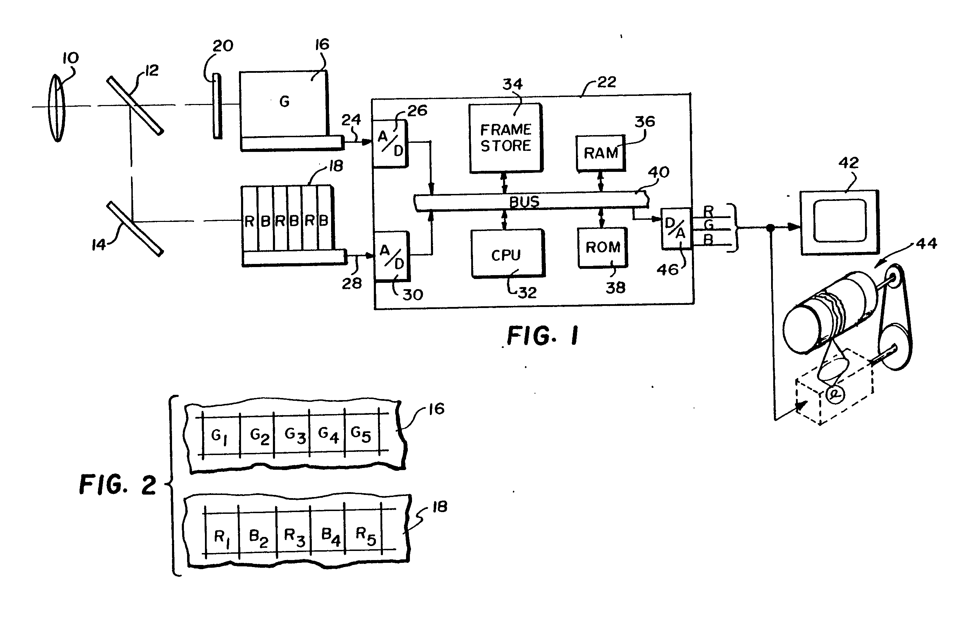

Apparatus for generating a sampled color image signal, processing the sampled color image signal, and displaying the processed sampled color image signal are shown in Fig. 1. The apparatus includes an optical system having a lens 10, a beam splitter 12 and a mirror 14 for forming an image on a pair of image sensors 16 and 18, such as CCD image sensing arrays. Image sensor 16 senses the luminance portion of the image, and is provided with a uniform green color filter 20. Image sensor 18 senses the chrominance components of the image and is provided with a striped color filter array having alternate red and blue vertical stripes labelled R and B in the figure.

The sampled analog luminance signal produced by image sensor 16 is supplied to a digital computer 22 on line 24 through an analog-to-digital converter 26. The sampled analog chrominance component signals produced by image sensor 18 are supplied to the computer 22 on line 28 through an analog-to-digital converter 30.

The digital computer 22 performs the signal processing according to the invention to interpolate chrominance component values between sampled chrominance component values in the color image signal.

The digital computer 22 includes a central processing unit 32, a frame store 34 for storing the unprocessed and processed digital color image signals and random access and read-only memories ROM and RAM 36 and 38 for storing the control programs for the computer. The digital image signals are supplied to the computer on data bus 40. Processed image signals are supplied to a display device such as a CRT 42 or graphic arts scanner 44 via digital-to-analog converter 46.

Although the elements of the apparatus are shown physically connected in Fig. 1, the elements may be physically separated and the signals carried between the elements via storage media such as magnetic tape or disc. For example, the sampled analog signals from the image sensor may be recorded directly on a video magnetic tape recorder and later supplied to the computer for signal processing. Similarly, the processed sampled image signals may be recorded for later display. Although the invention was reduced to practice using a general purpose digital computer, it will be obvious to one skilled in the art, that a programmed microprocessor, or custom designed integrated circuit can be employed to practice the invention.

The signal processing method performed by computer 22 will now be described with reference to Fig. 2. Fig. 2 shows a portion of a horizontal line of image sensing locations labeled $G_1$—$G_5$ on luminance image sensor 16, and a portion of the corresponding horizontal line on the chrominance image sensor 18. The purpose of the signal processing method is to provide interpolated chrominance component values (e.g. $B_1$, $R_2$, $B_3$, etc.) in such a manner that color fringes are reduced in areas of image detail without introducing hue shifts in these areas. This requires that image intensity information be faithfully reproduced while only smooth hue changes are allowed from one sampling location to the next.

In an image of uniform hue, the values of the luminance (G) and one of the chrominance components (for example the red component R) at one sample location (Rx, Gx) are related to the values (Ry, Gy) at another location as follows:

$$\frac{Ry}{Rx} = \frac{Gy}{Gx} \qquad (1)$$

in exposure space. If Ry represents an unknown chrominance component value at an interpolation location, from equation (1),

$$Ry = Gy \cdot \frac{Rx}{Gx} \qquad (2)$$

where

$$\frac{Rx}{Gx}$$

represents the measured hue component at another sample location.

In an image that does not have a uniform hue, as in a normal color image, smoothly changing hues are assured by interpolating the hue component values between neighboring chrominance component sample locations. Thus, the interpolated chrominance component R' becomes:

$$R' = G \cdot \left(\frac{R}{G}\right)' \qquad (3)$$

where the primed hue component represent an interpolated hue component value between neighboring chrominance component sample locations, and the luminance value G is the luminance value at the interpolation location.

This signal processing method is applied to the signal produced by the apparatus shown in Figs. 1 and 2, by employing linear interpolation between the hue component values at neighboring chrominance component sample locations. Interpolated chrominance component values in exposure space are obtained as follows:

$$R'_2 = \frac{G_2}{2}(R_1/G_1 + R_3/G_3) \qquad (4)$$

and similarly for the other chrominance component

$$B'_3 = \frac{G_3}{2}(B_2/G_2 + B_4/G_4) \qquad (5)$$

Alternatively, the hue components can be interpolated in density space. In density space, equation (3) becomes:

$$\log R' = \log G + (\log R - \log G)' \qquad (6)$$

Where the primed quantity in parenthesis indicates an interpolated hue component value between neighboring chrominance sample locations. Applying linear interpolation to the signals represented in Fig. 2, the interpolated chrominance component values in density space are obtained as follows:

$$\log R'_2 = \log G_2 + [(\log R_1 - \log G_1) + (\log R_3 - \log G_3)]/2 \qquad (7)$$

and similarly for the other chrominance component,

$$\log B'_3 = \log G_3 + [(\log B_2 - \log G_2) + (\log B_4 - \log G_4)]/2 \qquad (8)$$

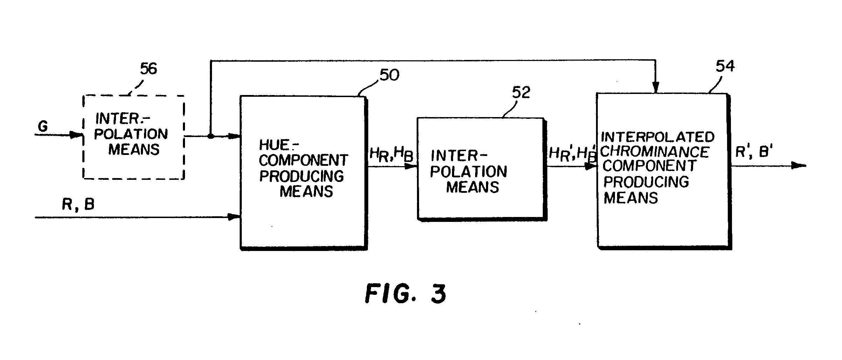

Fig. 3 is a block diagram illustrating the essential functions that are performed by the programmed computer 32 to accomplish the signal processing method of the present invention. Hue component signal producing means 50 receives the sampled luminance signal G and the sampled chrominance component signals R, B and produces hue component signals $H_R$, $H_B$, by dividing the chrominance component signals by the luminance signals as described above. Alternatively, in performing the operations in density space, the logs of the luminance signals are subtracted from the logs of the chrominance component signals as described above.

Interpolation means 52 receives the hue component signals $H_R$, $H_B$ and produces interpolated hue component signals $H_R'$, $H_B'$ representing the hue components at the interpolation locations. As disclosed above, the interpolation performed is preferably a linear interpolation. Alternatively, higher order interpolation may be performed. Means 54 for producing interpolated chrominance component signals receives the luminance signal G and the interpolated hue component signals $H_R'$, $H_B'$ and produces the interpolated chrominance component signals R', G' by multiplying the luminance signal by the interpolated hue component signal as described above.

Alternatively, in density space, the log of the luminance signal G is added to the log of the interpolated hue component signals $H_R'$, $H_B'$ to produce the interpolated chrominance component signals log R', log B' [see formula (6)].

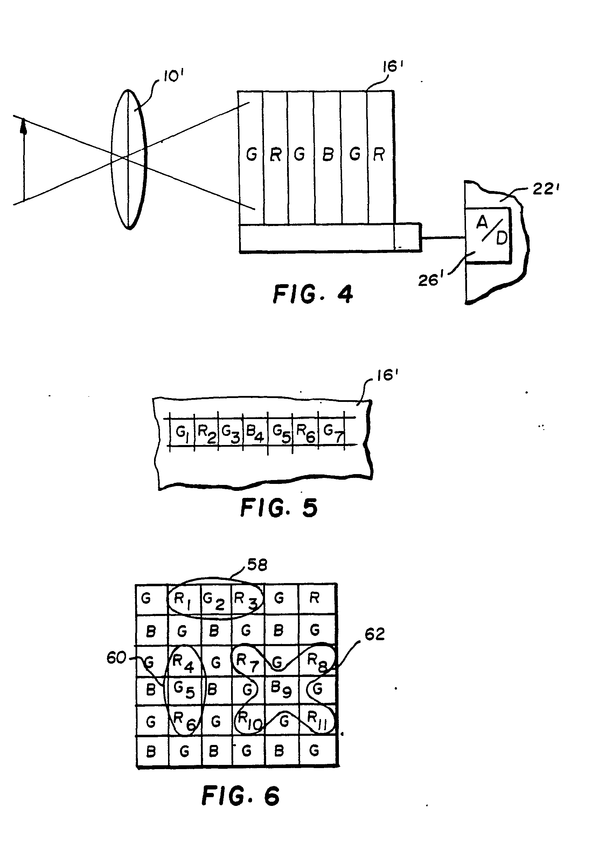

In the previous example, the luminance values at every location where actual values measured at each sample location by image sensor 16. Fig. 4 shows an example of a single-chip, color image sensor, where the luminance sampling locations in the horizontal direction are separated by chrominance component sampling locations. The single-chip color image sensor 16' is provided with a vertically striped color filter array having the alternating pattern green, red, green blue (G, R, G, B) of color filters. Other elements of the apparatus for processing and displaying the signal are the same as those shown in Fig. 1. Elements similar to those in Fig. 1 are numbered with primes (').

When the signal processing method is applied to the signals produced by the image sensor 16', luminance values (G) for the chrominance component sampling locations (R, B) are supplied by an appropriate form of interpolation. Fig. 5 shows a portion of one line of image sensing locations on the image sensor 16'. The interpolated luminance value at the chrominance component sampling location $R_2$ could be generated, for example, by linear interpolation as follows:

$$G'_2 = \frac{G_1 + G_3}{2} \qquad (9)$$

where the prime indicates that the luminance value is an interpolated value. The other luminance values are obtained in a similar manner.

Using the interpolated luminance values, the signal processing method of the present invention is applied to the signal in exposure space to provide interpolated chrominance component values as follows:

$$R'_3 = \frac{G_3}{4}(3R_2/G'_2 + R_6/G'_6) \qquad (10)$$

$$R'_4 = \frac{G'_4}{2}(R_2/G'_2 + R_6/G'_6) \qquad (11)$$

$$R'_5 = \frac{G_5}{4}(R_2/G'_2 + 3R_6/G'_6) \qquad (12)$$

where the hue component values are weighted to take into account the distance of the associated sensing location from the sampling location and where the primed luminance values ($G'_n$) represent interpolated luminance values. The blue chrominance component values are generated in a similar manner. In the block diagram of Fig. 3, an interpolation means 56 is shown in phantom. This interpolation means provides the interpolated luminance values G'.

In density space, the signal processing method is applied as follows to generate red chrominance component values:

$$\log R'_3 = \log G_3 + [3(\log R_2 - \log G'_2) + (\log R_6 - \log G'_6)]/4 \qquad (13)$$

$$\log R'_4 = \log G'_4 + [(\log R_2 - \log G'_2) + (\log R_6 - \log G'_6)]/2 \qquad (14)$$

$$\log R'_5 = \log G_5 + [(\log R_2 - \log G'_2) + 3(\log R_6 - \log G'_6)]/4 \qquad (15)$$

The blue chrominance component values are generated in a similar fashion.

Another well known filter array pattern for a single-chip color image sensor is the checkerboard pattern. One checkerboard pattern, often called a Bayer array, after the inventor, is described in U.S. Patent No. 3,971,065, issued July 20, 1976 to B. E. Bayer. A portion of a Bayer array pattern is shown in Fig. 6 where some of the sample locations are numbered for purposes of the following description.

In the Bayer array, each chrominance component sampling location is surrounded by four immediately adjacent luminance sampling locations. One appropriate way of generating interpolated luminance values is to average these four nearest neighbors as follows:

$$G' = \sum_{n=1}^{4} G_n 4 \qquad (16)$$

where the prime indicates an interpolated value, and $G_n$ are the nearest neighbors.

When applying the signal processing method of the present invention to the signals produced by an image sensor having a Bayer array sampling pattern, there are three different sampling configurations to consider. In the first configuration, indicated by the region labeled 58 in Fig. 6, the measured chrominance component values lie on either side of the interpolation location. In the second configuration, labeled 60 in Fig. 6, the measured chrominance component values lie above and below the interpolation location, and in the third configuration, indicated by the area labeled 62 in Fig. 6, the measured chrominance component values lie at the four corners of the interpolation location.

In exposure space, the signal processing method is applied to the signal produced by the Bayer array as follows.

For the first configuration,

$$R'_2 = \frac{G_2}{2}(R_1/G'_1 + R_3/G'_3) \qquad (17)$$

for the second configuration,

$$R'_5 = \frac{G_5}{2}(R_4/G'_4 + R_6/G'_6) \qquad (18)$$

and for the third configuration,

$$R'_9 = \frac{G'_9}{4}(R_7/G'_7 + R_8/G'_8 + R_{10}/G'_{10} + R_{11}/G'_{11}) \qquad (19)$$

where the primed luminance values indicate interpolated values. The interpolated values of the other chrominance component (e.g. the blue component) are produced in a similar manner.

In density space, the signal processing method is applied as follows:

$$\log R'_2 = \log G_2 + [(\log R_1 - \log G'_1) + (\log R_3 - \log G'_3)]/2 \qquad (20)$$

$$\log R'_5 = \log G_5 + [(\log R_4 - \log G'_4) + (\log R_6 - \log G'_6)]/2 \qquad (21)$$

$$\log R'_9 = \log G'_9 + [(\log R_7 - \log G'_7) + (\log R_8 - \log G'_8) + (\log R_{10} - \log G'_{10}) + (\log R_{11} - \log G'_{11})]/4 \qquad (22)$$

and the other chrominance component values (e.g. blue component) are determined in a similar manner.

A variety of photographic images were sampled to produce sampled color image signals, and the signal processing method according to the present invention was applied to the sampled colored image signals. The images reproduced from the processed sampled color image signals were found to have reduced color fringing in areas of image detail and were free from any noticeable hue shifts in these areas. A definite improvement was noted over images reproduced from signals processed according to prior art methods. Although the signal values produced when the image signals were processed in exposure space varied slightly from the signal values produced when the image signals were processed in density space, the differences in the appearance of the reproduced images from the processed signals were not significant enough so that one signal processing space could be determined to be preferable over the other.

The particular manner of interpolating the luminance values is not an essential feature of the general inventive concept, when processing a signal from a single chip color image sensor having a checkerboard-type sampling pattern like the Bayer array. In a suggested pattern recognition interpolation method, a plurality of interpolation routines, appropriate for producing interpolated signal values that complete a respective plurality of known geometrical image features are employed. A neighborhood of luminance sample values is examined to determine which geometrical image feature is represented by the local neighborhood of sample values, and the appropriate interpolation routine is used to produce the interpolated signal value.

Although the invention has been described as being performed by signal processing apparatus having a full frame store, it will be apparent to one skilled in the art that the signal processing apparatus needs to store only a few lines of the image sample at one time in order to perform the signal processing method.

Furthermore, although the invention was reduced to practice using a general purpose digital computer, it will be apparent to one skilled in the art, that a programmed microprocessor, or custom designed integrated circuits can be used to practice the invention.

Advantages and industrial applicability

The signal processing method according to the present invention has the advantage of reducing color fringing without introducing hue shifts in areas of image detail in an image reproduced from the processed sampled color image signal. The invention is useful in amateur or professional video and still imaging apparatus employing sample-type color image sensors, and in graphic arts apparatus for reproducing images from sampled color image signals.

## Claims

1. A signal processing method for producing signals representing interpolated chrominance component values between sampled chrominance component values in a sampled color image signal having a frequently sampled luminance signal component, and a less frequently sampled chrominance signal component, characterized by:

producing signals representing hue component values at chrominance component sample locations, as a function of a luminance value and a chrominance component value at the chrominance locations;

producing a signal representing an interpolated hue component value at an interpolation location as a function of neighboring hue component values; and

producing a signal representing an interpolated chrominance component value as a function of the interpolated hue component value and a luminance value at the interpolation location.

2. The method claimed in Claim 1, wherein the sampled color image signal represents luminance and chrominance component values in exposure space, the signals representing hue component values are produced as the ratio of the sampled chrominance component value to the luminance value at the respective sample locations, and the interpolated chrominance component value is produced as the product of the interpolated hue component value and the luminance value at the interpolation location.

3. The method claimed in Claim 1, wherein the sampled color image signal represents luminance and chrominance component values in density space, the hue component values are produced as the differences between the sampled chrominance component values and the luminance values at the respective sample locations, and the interpolated chrominance component value is produced as the sum of the interpolated hue component value and the luminance value at the interpolation location.

4. The method claimed in Claim 1, 2 or 3, wherein the step of producing a signal representing an interpolated hue component value comprises linear interpolation.

5. Apparatus for processing a sampled color image signal having a luminance component and one or more sampled chrominance components, the sampling locations represented by the chrominance components being spatially separate from each other, the signal processing apparatus providing signal values representing interpolated chrominance component values at interpolation locations between neighboring chrominance component sample locations, characterized by:

a) means (50) responsive to the signals representing the luminance and chrominance component values for producing signals representing hue component values at chrominance component sample locations;

b) means (52) responsive to the signals representing neighboring hue component values for producing a signal representing an interpolated hue component value at the interpolation location; and

c) means (54) responsive to the signals representing the luminance and the interpolated hue component values at the interpolation location for producing a signal representing the interpolated chrominance component value.

6. The apparatus claimed in Claim 5, wherein the sampled color image signal represents luminance and chrominance component values in exposure space, and wherein the signals representing the hue component values are produced as the ratio of the sampled chrominance component values to the luminance value at the respective sample locations, and the interpolated chrominance component value is produced as the product of the interpolated hue component value and the luminance value at the interpolation location.

7. The apparatus claimed in Claim 5, wherein the sampled color image signal represents luminance and chrominance component values in density space, and wherein the hue component values are formed as the differences between the sampled chrominance component values and the luminance values at the respective chrominance component sample locations, and the interpolated chrominance component value is formed as the sum of the interpolated hue component value and the luminance value at the interpolation location.

8. The apparatus claimed in Claim 5, 6 or 7, wherein the means for producing a signal representing an interpolated hue component value comprises means for performing linear interpolation between neighboring hue component signal values.

# EP 0 192 736 B1

## Patentansprüche

1. Signalverarbeitungsverfahren zur Erzeugung von Signalen, die interpolierte Chrominanzkomponentenwerte zwischen abgetasteten Chrominanzkomponentenwerten in einem abgetasteten Farbbildsignal darstellen, das einen mit hoher Abtastrate erzeugten Luminanzsignalteil und einem mit weniger hoher Abtastrate erzeugen Chrominanzsignalteil besitzt, dadurch gekennzeichnet,

daß Farbtonkomponentenwerten entsprechende Signale an Abtaststellen von Chrominanzkomponenten als Funktion eines an den Chrominanz Stellen vorliegenden Luminanzwertes und eines Chrominanzkomponentenwertes erzeugt werden;

daß ein einem interpolierten Farbtonkomponentenwert an einer Interpolationsstelle entsprechendes Signals als Funktion benachbarter Farbtonkomponentenwerte erzeugt wird und

daß an einem interpolierten Chrominanzkomponentenwert entsprechendes Signal als Funktion des interpolierten Farbtonkomponentenwertes und eines Luminanzwertes an der Interpolationsstelle erzeugt wird.

2. Verfahren nach Anspruch 1, dadurch gekennzeichnet, daß das abgetastete Farbbildsignal Luminanz- und Chrominanzkomponentenwerten im Belichtungsraum entspricht, daß die Farbtonkomponentenwerte darstellenden Signale als Verhältnis des abgetasteten Chrominanzkomponentenwertes zu dem Luminanzwert an den jeweiligen Abtaststellen erhalten werden und daß der interpolierte Chrominanzkomponentwert als Produkt des interpolierten Farbtonkomponentenwertes und des Luminanzwertes an der Interpolationsstelle erhalten wird.

3. Verfahren nach Anspruch 1, dadurch gekennzeichnet, daß das abgetastete Farbbildsignal Luminanzwerte und Chrominanzkomponentenwerte im Dichteraum darstellt, daß die Farbtonkomponentenwerte in Form der Unterschiede zwischen den abgetasteten Chrominanzkomponentenwerten und den Luminanzwerten an den jeweiligen Abtaststellen erhalten werden und daß der interpolierte Chrominanzkomponentenwert als Summe aus dem interpolierten Farbtonkomponentenwert und dem Luminanzwert an der Interpolationsstelle erhalten wird.

4. Verfahren nach Anspruch 1, 2 oder 3, dadurch gekennzeichnet, daß bei der Erzeugung eines einen interpolierten Farbtonkomponentenwert darstellenden Signals eine lineare Interpolation erfolgt.

5. Vorrichtung zur Verarbeitung eines abgetasteten Farbbildsignals mit einem Luminanzsignalteil und mindestens einem abgetasteten Chrominanzsignalteil, wobei die den Chrominanzteilen entsprechenden Abtaststellen räumlich voneinander getrennt sind und die Signalverarbeitungsvorrichtung Signalwerte liefert, die interpolierten Chrominanzkomponentenwerten an Interpolationsstellen zwischen benachbarten Abtaststellen der Chrominanzkomponenten entsprechen, gekennzeichnet durch

a) Mittel (50), die als Funktion der Signale, die die Luminanzwerte und die Chrominanzkomponentenwerte darstellen, Signale erzeugen, die Farbtonkomponentenwerten an den Abtaststellen der Chrominanzkomponenten entsprechen;

b) Mittel (52), die als Funktion der den benachbarten Farbtonkomponentenwerten entsprechenden Signale ein Signal erzeugen, das einen interpolierten Farbtonkomponentenwert an der Interpolationsstelle darstellt; und

c) Mittel (54), die als Funktion der den Luminanzwerten und den interpolierten Farbtonkomponentenwerten an der Interpolationsstelle entsprechenden Signale ein Signal erzeugen, das den interpolierten Chrominanzkomponentenwert darstellt.

6. Vorrichtung nach Anspruch 5, dadurch gekennzeichnet, daß das abgetastete Farbbildsignal Luminanzwerte und Chrominanzkomponentenwerte im Belichtungsraum darstellt und daß die den Farbtonkomponentenwerten entsprechenden Signale als Verhältnis der abgetasteten Chrominanzkomponentenwerte zu dem Luminanzwert an den jeweiligen Abtaststellen erhalten werden und der interpolierte Chrominanzkomponentenwert als Produkt des interpolierten Farbtonkomponentenwerts und des Luminanzwertes an der Interpolationsstelle erhalten wird.

7. Vorrichtung nach Anspruch 5, dadurch gekennzeichnet, daß das abgetastete Farbbildsignal Luminanzwerte und Chrominanzkomponentenwerte im Dichteraum darstellt und daß die Farbtonkomponentenwerte in Form der Unterschiede zwischen den abgetasteten Chrominanzkomponentenwerten und den Luminanzwerten an den jeweiligen Abtaststellen der Chrominanzkomponenten erhalten werden und der interpolierte Chrominanzkomponentenwert als Summe aus dem interpolierten Farbtonkomponentenwert und dem Luminanzwert an der Interpolationsstelle erhalten wird.

8. Vorrichtung nach Anspruch 5, 6 oder 7, dadurch gekennzeichnet, daß die Mittel zur Erzeugung eines einen interpolierten Farbtonkomponentenwert darstellenden Signals eine Einrichtung zur Durchführung einer linearen Interpolation zwischen benachbarten Farbtonkomponenten-Signalwerten umfassen.

## Revendications

1. Procédé de traitement de signal pour fournir des signaux représentatif des valeurs interpolées de la composante de chrominance entre les valeurs échantillonnées du signal de chrominance d'un signal image en couleurs présentant un signal de luminance fréquemment échantillonnée et un signal de chrominance moins fréquemment échantillonnée que le signal de luminance, caractérisé en ce que:

on produit, aux endroit d'échantillonnage des signaux de chrominance, des valeurs de teintes fonction des valeurs de luminance des emplacements voisins et des valeurs de chrominance desdits endroits d'échantillonnage des signaux de chrominance;

on produit aux emplacements d'interpolation, un signal d'interpolation des valeurs de teintes fonction des valeurs de teintes voisines; et

on produit une valeur d'interpolation du sginal de chrominance fonction dudit signal d'interpolation des valeurs de teintes et du signal de luminance à l'emplacement d'interpolation.

2. Procédé conforme à la revendication 1, dans lequel le signal échantillonné d'image en couleurs représente les valeurs de luminance et de chrominance dans un espace d'exposition, les valeurs de teintes correspondent au rapport entre la valeur du signal de chrominance échantillonnée et la valeur du signal de luminance à la position respective échantillonnée, et la valeur d'interpolation du signal de chrominance est obtenue par le produit de la valeur de teinte interpolée et de la valeur du signal de luminance à l'emplacement d'interpolation.

3. Procédé conforme à la revendication 1, dans lequel le signal échantillonnée d'image en couleurs représente les valeurs de luminance et de chrominance dans un espace de densité, les valeurs de teintes correspondent aux différences entre la valeur du signal de chrominance échantillonnée et la valeur du signal de luminance aux emplacements respectifs, et la valeur d'interpolation du signal de chrominance est obtenue par la somme de la valeur de teinte interpolée et de la valeur du signal de luminance à l'emplacement d'interpolation.

4. Procédé conforme à l'une quelconque des revendications 1 à 3, dans lequel la valeur d'interpolation des valeurs de teintes est obtenue par interpolation linéaire.

5. Appareil de traitement d'un signal échantillonné d'image en couleurs présentant une composante de luminance et au moins une composante de chrominance échantillonnée, les emplacements d'échantillonnage de la composante de chrominance étant spatialement séparés les uns des autres, appareil fournissant des valeurs interpolées de chrominance aux emplacements d'interpolations situés entre les emplacements pour lesquels le signal de chrominance est échantillonné, et caractérisé en ce qu'il comprend:

a) des moyens (50) sensible aux signaux représentatif des valeurs de luminance aux emplacements voisins des emplacements d'échantillonnage du signal de chrominance pour produire des signaux représentatifs de valeurs de teintes auxdits emplacement d'échantillonnage du signal de luminance;

b) des moyens (52) sensible aux signaux représentatif des valeurs de teintes pour produire un signal d'interpolation représentatif de la valeur de teinte interpolée à l'emplacement d'interpolation;

c) des moyens (54) sensible au signal de luminance et au signal d'interpolation pour produire un signal représentatif de la valeur interpolée de la composante de chrominance.

6. Appareil conforme à la revendication 5, dans lequel le signal échantillonné d'image en couleurs représente les valeurs de luminance et de chrominance dans un espace d'exposition, et dans lequel les valeurs de teintes correspondent au rapport entre la valeur du signal de chrominance échantillonnée et la valeur du signal de luminance à la position respective échantillonnée, et la valeur d'interpolation du signal de chrominance est obtenue par le produit de la valeur de teinte interpolée et de la valeur du signal de luminance à l'emplacement d'interpolation.

7. Appareil conforme à la revendication 5, dans lequel le signal échantillonnée d'image en couleurs représente les valeurs de luminance et de chrominance dans un espace de densité, les valeurs de teintes correspondent aux différences entre la valeur du signal de chrominance échantillonnée et la valeur du signal de luminance aux emplacements respectifs, et la valeur d'interpolation du signal de chrominance est obtenue par la somme de la valeur de teinte interpolée et de la valeur du signal de luminance à l'emplacement d'interpolation.

8. Appareil conforme à l'une quelconque des revendications 5 à 7, dans lequel les moyens pour produire le signal d'interpolation comprend des moyens effectuant une interpolation linéaire entre deux signaux voisins représentatifs des valeurs de teintes.

FIG. 1

FIG. 2

FIG. 3

FIG. 4

FIG. 5

FIG. 6